(19) Europäisches Patentamt
European Patent Office
Office européen des brevets

(11) Publication number: **0 240 900 B1**

# EUROPEAN PATENT SPECIFICATION

(45) Date of publication of patent specification: **09.10.91**

(51) Int. Cl.⁵: **B60K 31/02, G05D 13/04**

(21) Application number: **87104719.7**

(22) Date of filing: **31.03.87**

(54) Selective transmission speed control.

(30) Priority: **11.04.86 US 850640**

(43) Date of publication of application:
**14.10.87 Bulletin 87/42**

(45) Publication of the grant of the patent:
**09.10.91 Bulletin 91/41**

(84) Designated Contracting States:
**DE FR GB IT SE**

(56) References cited:
**EP-A- 0 036 753**
**EP-A- 0 142 044**
**WO-A-84/01750**
**DE-A- 3 416 369**
**US-A- 4 474 155**

(73) Proprietor: **EATON CORPORATION**
**Eaton Center, 1111 Superior Avenue**
**Cleveland Ohio 44114(US)**

(72) Inventor: **Braun, Eugene Ralph**
**804 Lloyd**
**Royal Oak Michigan 48073(US)**

(74) Representative: **Rüger, Rudolf, Dr.-Ing. et al**
**Webergasse 3 Postfach 348**
**W-7300 Esslingen/Neckar(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates generally to a vehicular speed control system according to the features of the opening clause of claim 1.

A vehicular speed control system of this type is described in US-A-4 474 155. This speed control system is provided for an internal combustion engine of the type wherein the operator's fuel command signals are furnished to a computer which controls the amount of fuel flow to the engine and calculates the amount of airflow necessary to provide a predetermined air/fuel ratio in a fuel-air section. Furthermore the control system is operative to determine the maximum allowable engine speed. To this end it receives an engine speed signal by means of a suitable engine speed sensor.

The governor control system varies the maximum allowable speed with engine temperature, water temperature and engine load.

However, the maximum allowable engine speed which is determined by the control system is independent of the gear ratio which is selected in the transmission that is arranged within the driving line between the engine and the driven wheels.

Accordingly it is an object of this invention to provide a control system operative to allow the use of the complete engine speed range at the lower gear ratios yet to prevent vehicular speed from exeeding a predetermined amount at higher gear speed ratios for purposes of economy, safety and the like.

This object is achieved by a vehicular speed control system according to claim 1.

## BRIEF DESCRIPTION OF THE DRAWINGS

FIGURE 1 shows a schematic side elevation view of an embodiment of the speed control system of the invention; and

FIGURE 2 shows a graph of vehicular ground speed versus engine speed for a vehicle having its engine speed controlled by an embodiment of the speed control system of the invention.

## DESCRIPTION OF SOME PREFERRED EMBODIMENTS

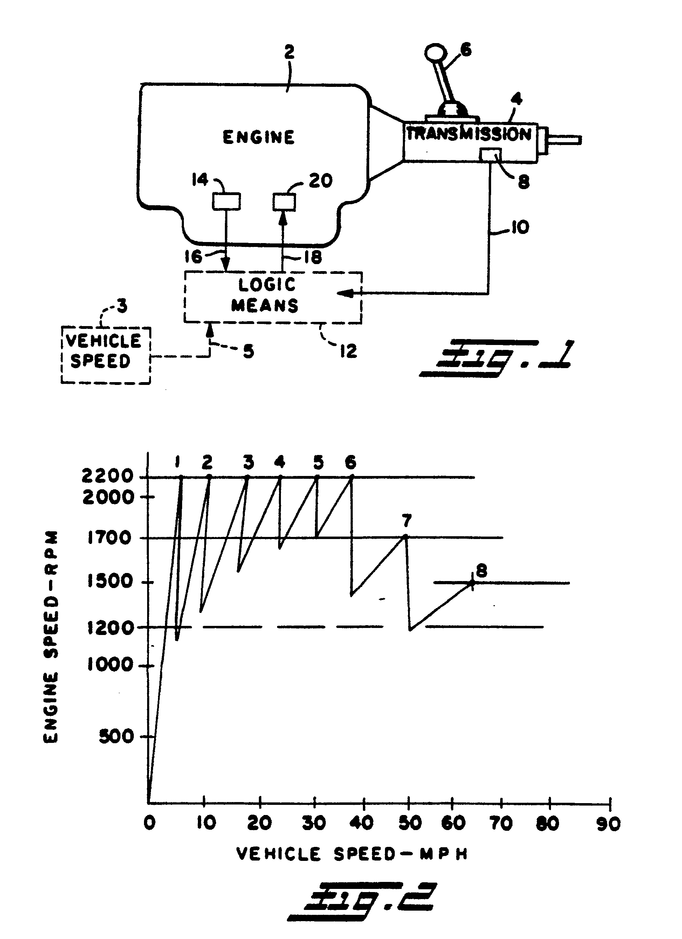

An embodiment of the control system of the invention for selectively controlling engine speed and/or vehicular ground speed is shown in FIGURE 1 in which rotational speed of an output shaft such as a drive shaft of a vehicular engine 2 such as a truck or passenger car gasoline or diesel engine is prevented from exceeding predetermined values and, as a result, limiting vehicular ground speed such as hereinafter described with respect to FIGURE 2.

The output or drive shaft of engine 2 is coupled to the input shaft of transmission 4 which may be manual, semi-automatic, automatic or combinations of same as previously described.

Transmission 4 is provided with a plurality of selectable forward change gear ratios progressively increasing from a lowest to a highest over a progressively increasing ground speed range prescribed for the particular vehicle. The particular number of forward gear speed ratios involved depends generally upon the particular vehicle and load factors involved and may range, for example, from typically three to five forward gear ratios for passenger cars to as many as eight or even as high as sixteen or more forward gear ratios for trucks using compound transmissions as previously described. The particular gear ratios of transmission 4 are selected by positioning shift arm 6 according to a prescribed pattern which differs according to whether the transmission is manual, semi-automatic or automatic, as is well known to those skilled in the art.

Transmission 4 is provided with a gear ratio position sensor 8 that is adapted to provide a second signal 10 to logic means 12 such as a suitable electronic logic circuit only when certain predetermined transmission 4 gear ratios are engaged. Sensor 8 may, for example, be a magnetic pick-up or direct electrical contact arrangement operable to provide an electrical signal when shift control arm 6 is placed in certain gear ratio positions. Alternatively, sensor 8 may be operable to provide a signal indicative of each and every forward gear speed ratio position which is then distinguished by logic means 12 for particular positions as hereinafter described.

The particular gear speed ratios for which it is desired to control engine and ground speed is preferably the highest within the range available and thence the next highest such as hereinafter discussed with respect to FIGURE 2 but not all and certainly not the lowest forward gear speed ratio available from transmission 4 for such would limit the desired start-up power requirements previously described. In one embodiment, for example, the control system of the invention is operable to limit vehicular speed for the three highest forward gear ratios provided by the transmission.

In addition to second signal 10, logic means 12 receives a first signal 16 from engine 2 provided by engine speed sensor member 14 that is adapted to monitor engine speed. Sensor member 14 may, for example, be a Hall-effect type sensor adapted to provide a signal corresponding to engine speed by counting teeth of a rotating gear driven by engine 2. Since engine speed and vehicular speed are related, the term "vehicular speed" as used herein means either engine speed or vehicular ground speed as shown for example in FIGURE I where vehicle speed sensor 3 may be alternately employed to provide a signal 5 indicative of vehicle ground speed to control means 12.

Logic means 12 may be any logic circuitry operable to receive and process signals 10 and 16 or 5 and provide in response an output control signal 18 to a speed control device 20 such as a governor or suitable throttle stop well known to those skilled in the art that limits fuel supply to prevent engine speed and ultimately vehicular ground speed from exceeding a prescribed value whenever the particular predetermined gear ratios of transmission 4 are selected.

An example of the application of the vehicular speed control system of the invention to a heavy duty truck having eight forward gear ratios is shown in graph form in FIGURE 2. In FIGURE 2, the maximum desirable engine rpm is 2200 regardless of the gear ratio engaged. Of the eight gear ratios only the highest gear ratio 8 and the next highest gear ratio 7 trigger an upper limit control upon the engine speed. Thus, the engine speed is not prevented from reaching 2200 rpm for the first six gear ratios for a ground speed of from 0 to about 65km/h but once the seventh gear ratio is engaged, logic means 12 is operative to provide a signal to engine speed control means such as a governor preventing engine speed from exceeding 1700 whenever gear ratio 7 is engaged and 1500 whenever gear ratio 8 is engaged resulting in fuel saving economy for ground speeds of 80km/h and higher while enabling high engine speed at lower gear ratio to provide power for overcoming inertia, climbing inclines and the like.

In addition, engine and/or ground speed sensing may include an acceleration term dv/dt well known to those skilled in the art of devices operative to provide precise control over engine and/or vehicular ground speed since the first derivative of velocity with respect to time provides information relative to the slow down or speed up of vehicular speed.

Further to control of highest engine and/or ground speed for particular selected gear ratios, the control system of the invention may further include cruise control means that is operative to maintain vehicular speed about a desired value selected within the vehicular speed range provided by the predetermined gear ratios selected for upper limit vehicular speed control.

Generally, the vehicular speed control system of the invention is particularly advantageous for use by over the road trucks which spend a good portion of their time at higher speeds resulting in good performance and fuel efficiency whilst allowing full performance of the engine under start-up and lower speed conditions.

## Claims

1. A vehicular speed control system for a vehicular engine (2) drivingly coupled to a change gear transmission (4) operable to provide a plurality of selectable forward gear ratios, said system including engine speed sensor means (14) and engine speed control means (20) operative to receive signals (16, 10) from said engine speed sensor means (14) to limit engine speed to a predetermined maximum value, characterized in that gear ratio sensor means (8) are provided for indicating engagement of certain predetermined gear ratios and coupled to said engine speed control means (20) which are operative to receive signals (10) from said gear ratio sensor means (8) and limit engine speed to a predetermined maximum value for each of the predetermined gear ratios wherein the maximum value is lower for the highest gear ratios than for the lowest gear ratios.

2. The control system of claim 1 wherein the predetermined gear ratios include the highest and second highest forward gear ratios provided by said transmission.

3. The control system of claim 1 wherein said predetermined gear ratios include no more than the three highest forward gear ratios provided by said transmission.

4. The control system of claim 1 including cruise control means operative to control vehicular speed about a selected value within the vehicular speed range provided by said predetermined transmission forward gear ratios.

5. The control system of claim 4 wherein the selected value of vehicular speed is modified by a signal indicative of throttle position.

6. The control system of claim 1 wherein the transmission is an automatic transmission.

7. The control system of claim 1 wherein the transmission is a manual transmission.

8. The control system of claim 1 wherein the transmission is operable in manual or automatic modes.

9. Combination of an engine and a vehicular transmission which combination is controlled by the control system of claim 1.

## Revendications

1. Système de commande de la vitesse du véhicule pour un moteur (2) de véhicule qui est accouplé cinématiquement à une boîte de vitesses (4) capable de fournir une pluralité de rapports de marche avant pouvant être sélectionnés, ledit système comprenant des moyens (14) formant un capteur de vitesse du moteur et des moyens (20) de commande de la vitesse du moteur qui peuvent recevoir des signaux (16, 10) issus desdits moyens capteurs (14) de vitesse du moteur, pour limiter la vitesse du moteur à une valeur maximum prédéterminée, caractérisé en ce que des moyens (18) capteurs de rapports sont prévus pour indiquer l'engagement de certains rapports prédéterminés et sont connectés auxdits moyens (20) de commander de la vitesse du moteur qui reçoivent les signaux (10) desdits moyens (8) capteurs de rapports et limitent la vitesse du moteur à une valeur maximum prédéterminée pour chacun des rapports prédéterminés, la valeur maximum étant plus basse pour les plus grands rapports que pour les plus petits rapports.

2. Système de commande selon la revendication 1, dans lequel les rapports prédéterminés comprennent le plus élevé et le deuxième plus élevé des rapport en marche avant donnés par ladite boîte de vitesses.

3. Système de commande selon la revendication 1, dans lequel lesdits rapports prédéterminés ne comprennent pas plus des trois plus élevés des rapports de marche avant donnés par ladite boîte de vitesses.

4. Système de commande selon la revendication 1, comprenant des moyens de commande de croisière qui entrent en action pour commander la vitesse du véhicule à peur près à une valeur sélectionnée comprise dans la gamme des vitesses du véhicule qui sont données par lesdits rapports de marche avant prédéterminés de la boîte de vitesses.

5. Système de commande selon la revendication 4, dans lequel la valeur sélectionnée de la vitesse du véhicule est modifiée par un signal indicatif de la position de la commande des gaz.

6. Système de commande selon la revendication 1, dans lequel la boîte de vitesses est une boîte de vitesses automatique.

7. Système de commande selon la revendication 1, dans lequel la boîte de vitesses est une boîte manuelle.

8. Système de commande selon la revendication 1, dans lequel la boîte de vitesses peut être commandée dans le mode manuel ou dans le mode automatique.

9. Combinaison d'un moteur et d'une boîte de vitesses de véhicule, laquelle combinaison est commandée par le système de commande de la revendication 1.

**Patentansprüche**

1. Für Kraftfahrzeuge vorgesehenes Drehzahlsteuersystem für einen Fahrzeugmotor (2), der antriebsmäßig mit einem Geschwindigkeitswechselgetriebe (4) verbunden ist, das eine Anzahl auswählbarer Vorwärtsgänge aufweist, mit einer Motordrehzahl-Meßeinrichtung (14) sowie einer Motordrehzahl-Steuereinrichtung (20), die dazu dient, Signale (16, 10) von der Motordrehzahl-Meßeinrichtung (14) zu empfangen und die Motordrehzahl auf einen vorbestimmten Maximalwert zu begrenzen, dadurch gekennzeichnet, daß zur Erkennung, daß bestimmte festgelegte Gangstufen eingelegt sind, Gangstufen-Erfassungseinrichtungen (8) vorgesehen sind, die an die Motordrehzahlsteuereinrichtung (20) angeschlossen sind, die dazu dient, Signale von den Gangstufen-Erfassungseinrichtungen (8) zu erhalten und für jede der festgelegten Gangstufen die Motordrehzahl auf einen vorbestimmten Maximalwert zu begrenzen, wobei der Maximalwert für die höchsten Gangstufen kleiner als für die niedrigsten Gangstufen ist.

2. Steuersystem nach Anspruch 1, bei dem die vorbestimmten Gangstufen die höchste und die zweithöchste Gangstufe umfassen, die das Getriebe aufweist.

3. Steuersystem nach Anspruch 1, bei dem die vorbestimmten Gangstufen nicht mehr als die höchsten drei Vorwärtsgangstufen umfassen, die das Getriebe aufweist.

4. Steuersystem nach Anspruch 1, mit einer Fahrzeuggeschwindigkeitsregelung, die dazu dient, die Fahrzeuggeschwindigkeit um einen ausgewählten Wert einzuregeln, der innerhalb des Fahrzeuggeschwindigkeitsbereiches liegt, der durch die festgelegten Vorwärtsgangstufen des Getriebes bestimmt ist.

5. Steuersystem nach Anspruch 4, bei dem der gewählte Wert für die Fahrzeuggeschwindigkeit durch ein Signal modifiziert wird, das für die Drosselstellung kennzeichnend ist.

6. Steuersystem nach Anspruch 1, bei dem das Getriebe ein automatisches Getriebe ist.

7. Steuersystem nach Anspruch 1, bei dem das Getriebe ein handgeschaltetes Getriebe ist.

8. Steuersystem nach Anspruch 1, bei dem das Getriebe in handgeschalteter oder automatisch geschalteter Arbeitsweise betreibbar ist.

9. Kombination aus einem Motor und einem Kraftfahrzeuggetriebe, die durch das Steuersystem nach Anspruch 1 gesteuert ist.

Fig.1

Fig.2